# EUROPÄISCHE PATENTSCHRIFT

(11) **EP 3 662 147 B1**
(45) Veröffentlichungstag und Bekanntmachung des Hinweises auf die Patenterteilung: **20.10.2021**
(21) Anmeldenummer: 18737886.4
(22) Anmeldetag: 05.07.2018
(51) Int. Cl.: F16K 29/00, F01L 3/10, F01L 1/32

(54) **VENTILDREHVORRICHTUNG**
VALVE ROTATING DEVICE
SYSTÈME DE ROTATION DE SOUPAPES

(30) Priorität: 13.11.2017 DE 102017126541
(43) Veröffentlichungstag der Anmeldung: 10.06.2020
(73) Patentinhaber: Federal-Mogul Valvetrain GmbH, 30890 Barsinghausen (DE)
(72) Erfinder: WOLKING, Antonius, 30890 Barsinghausen (DE); ARIEF, Luthfi, 30161 Hannover (DE); RINGELING, Florian, 30167 Hannover (DE)
(74) Vertreter: Kurig, Thomas
(86) Internationale Anmeldenummer: PCT/EP2018/068215
(87) Internationale Veröffentlichungsnummer: WO 2019/091605

(56) Entgegenhaltungen:
- FR-A5- 2 159 794
- GB-A- 2 040 399
- JP-A- H11 324 620
- US-A- 3 710 768

## Beschreibung

### Gebiet der Erfindung

Die vorliegende Erfindung betrifft eine Ventildrehvorrichtung für Verbrennungsmotoren.

### Stand der Technik

Zur Verhinderung einer in Umfangrichtung ungleichmäßigen Belastung der Ventile eines Verbrennungsmotors, ist während des Betriebs eine stetige Drehung der Ventile notwendig. Durch die Drehung werden einseitiger Verschleiß und Ablagerungen am Ventilsitz vermieden. Auch wird eine in Umfangrichtung gleiche Temperaturverteilung erreicht. Ist die "natürliche" Drehung" der Ventile zu gering, werden Zwangsdrehvorrichtungen eingesetzt, sogenannte Ventildrehvorrichtungen.

Ventildrehvorrichtungen erzeugen eine Ventildrehung, indem Kugeln, die in Taschen in einem Grundkörper angeordnet sind und die an einer Tellerfeder anliegen, gezwungen werden auf schrägen Laufbahnen, die in den Taschen gebildet sind, abzurollen und somit Grundkörper und Tellerfeder relativ zueinander um die Ventilachse zu verdrehen. Die Tellerfeder ist mittels Reibungsschluss mit einem Deckel verbunden, welcher gleichzeitig die Ventilfeder stützt. Die Drehung kann entweder beim Ventilöffnungshub oder beim Ventilschließhub erfolgen. Es sind obenliegende Ausführungen, d.h. die Ventildrehvorrichtung befindet sich auf der brennraumabgewandten Seite der Ventilfeder, und untenliegende Ausfiihrungen, d.h. die Ventildrehvorrichtung befindet sich auf der brennraumzugewandten Seite der Ventil feder, möglich. Bei der obenliegenden Ausführung weist der Grundkörper eine konische Öffnung auf, in die Kegelstücke eingesetzt werden, welche das Ventil am Schaftende halten. Bei der untenliegenden Ausführung liegt der Grundkörper auf dem Zylinderkopf auf und die Drehung wird über die Ventilfeder auf das

### Ventil übertragen.

Aufgrund des punktuellen Kontaktes der Kugeln mit der Tellerfeder treten hohe Wälzpressungen auf, welche zu einer hohen Belastung der Tellerfeder führen. Die hohe Wälzbelastung führt zu Verschleiß der Tellerfeder, insbesondere zu Pitting (d.h. Lochfraß bzw. Punktkorrosion).

JPH1 1324620 offenbart eine Ventildrehvorrichtung.

Eine Aufgabe der vorliegenden Erfindung ist es, eine kompakte Ventildrehvorrichtung bereitzustellen, welche hohe Wälzbelastungen der Tellerfeder und damit einhergehenden Verschleiß vermeidet.

### Zusammenfassung der Erfindung

Erfindungsgemäß wird die Aufgabe gelöst durch eine Ventildrehvorrichtung umfassend einen ringförmigen Grundkörper, der mehrere in einer Umfangrichtung orientierte Taschen aufweist, in denen jeweils eine Kugel und eine Tangentialfeder angeordnet sind, wobei die Taschen in Umfangrichtung eine variable Tiefe aufweisen, so dass schräge Laufbahnen für die darin angeordneten Kugeln gebildet werden, wobei die Tangentialfedern die Kugeln in Richtung eines Endes der jeweiligen Tasche drücken, einen ringförmigen Deckelkörper, der relativ zum Grundkörper um eine Achse drehbar und axial verschiebbar ist, der ein ringförmiges erstes Trägerelement und ein ringförmiges zweites Trägerelement aufweist, welche voneinander axial beabstandet sind, und der ein Verbindungsmittel aufweist, welches das erste und das zweite Trägerelement verbindet und welches das erste und das zweite Trägerelement relativ zueinander fixiert, und ein ringförmiges Axialfederelement, wobei sich ein erstes Ende des Axialfederelements an einer ringförmigen Anschlagfläche des Grundkörpers abstützt und sich ein zweites Ende des Axialfederelements an einer Oberfläche des ersten Trägerelements abstützt, wobei das Axialfederelement zwischen dem ersten Trägerelement und dem zweiten Trägerelement angeordnet ist, wobei eine Oberfläche des zweiten Trägerelements, welche von dem Axialfederelement abgewandt ist, an den Kugeln anliegt, und wobei die Kugeln und das Axialfederelement in Radialrichtung überlappend angeordnet sind, wobei das erste Trägerelement, das zweite Trägerelement und das Verbindungsmittel einstückig gefertigt sind, und wobei das Verbindungsmittel in Form einer ringförmigen äußeren Wand vorliegt, welche eine Ausnehmung aufweist, durch die das Axialfederelement (6) seitlich eingesetzt ist.

Gemäß einem weiteren Aspekt der vorliegenden Erfindung ist das Verbindungsmittel radial außerhalb des Axialfederelements angeordnet.

Gemäß einem weiteren Aspekt ist die Anschlagfläche mit einer Gleitbeschichtung versehen.

Gemäß einem weiteren Aspekt ist an der Anschlagfläche ein Axialnadellager oder ein Axialkugellager angeordnet.

Gemäß einem weiteren Aspekt ist das Axialfederelement eine Tellerfeder.

Gemäß einem weiteren Aspekt umfasst das Axialfederelement mindestens zwei gestapelte Tellerfedern.

Gemäß einem weiteren Aspekt ist eine vom Axialfederelement abgewandte Oberfläche des ersten Trägerelements eingerichtet, als Stützfläche für eine Ventilfeder zu dienen.

Gemäß einem weiteren Aspekt weist die vom Axialfederelement abgewandte Oberfläche des zweiten Trägerelements eine Kugellaufbahn auf.

,Axial' bezieht sich auf eine durch die ringförmigen Körper definierte Achse, die im eingebauten Zustand mit der Ventilachse zusammenfällt.

### Kurze Beschreibung der Zeichnung

Im Folgenden werden beispielhafte Ausfilhrungsformen der Erfindung unter Bezug auf die Figuren genauer beschrieben, wobei
Fig. 1 einen axialen Schnitt einer Ventildrehvorrichtung gemäß einer Ausführungsform der Erfindung zeigt;
Fig. 2 einen axialen Schnitt einer Ventildrehvorrichtung gemäß einer andern Ausführungsform zeigt;
Fig. 3 einen axialen Schnitt einer Ventildrehvorrichtung gemäß einer weiteren Ausführungsform zeigt;
Fig. 4 eine perspektivische Ansicht eines Deckelkörpers mit teilweise eingesetztem Axialfederelement zeigt; und
Fig. 5 einen Schnitt in Umfangrichtung einer Tasche zeigt.

### Ausführliche Beschreibung der Erfindung

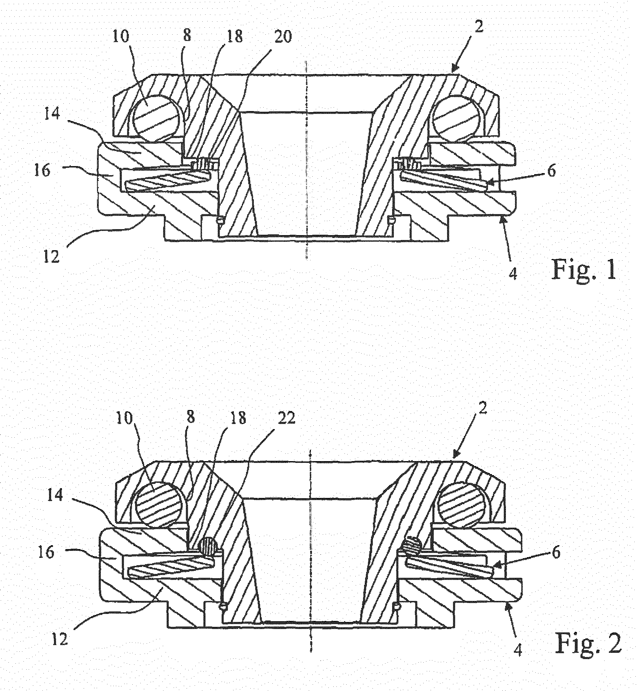

Fig. 1 stellt eine erfindungsgemäße Ventildrehvorrichtung in einem axialen Schnitt ― d.h. eine Achse der Ventildrehvorrichtung liegt in der Schnittebene ― dar. Die Ventildrehvorrichtung umfasst einen ringförmigen Grundkörper 2, einen ringförmigen Deckelkörper 4 und ein ringförmiges Axialfederelement 6. Grundkörper 2 und Deckelkörper 4 sind relativ zueinander um die Achse der Ventildrehvorrichtung (also in Umfangrichtung) verdrehbar und relativ zueinander in axialer Richtung verschiebbar. Es ist eine obenliegende Ausführung dargestellt. Entsprechend ist der Grundkörper 2 mit einer konischen Öffnung versehen, in welche Kegelstücke eingesetzt werden können, die geeignet sind, ein Ventil zu halten. Ebenso ist eine untenliegende Ausführung möglich. Eine konische Öffnung ist dann nicht notwendig, sondern lediglich eine Öffnung, durch welche der Schaft eines Ventils verlaufen kann.

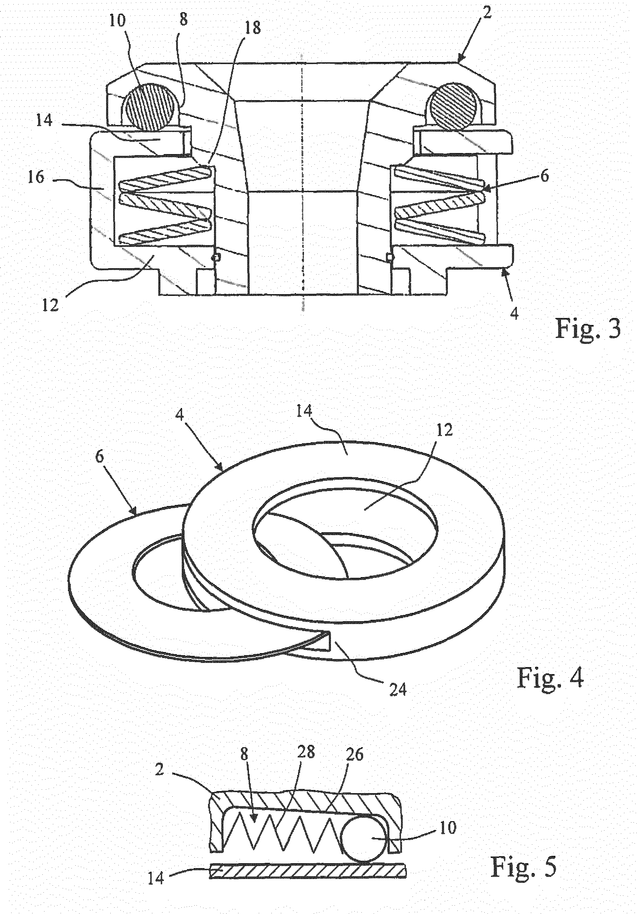

In den Grundkörper 2 sind in Umfangrichtung mehrere Taschen 8 (bzw. Vertiefungen) eingearbeitet, welche in Umfangrichtung orientiert sind und sich in Umfangrichtung (senkrecht zur Zeichenebene) jeweils über einen bestimmten Winkelbereich erstrecken. Eine Tiefe der Taschen 8 (also die Ausdehnung der Taschen in axialer Richtung) ist in Umfangrichtung variabel, so dass in jeder der Taschen 8 eine schräge Laufbahn 26 gebildet wird; vgl. Fig. 5. In jeder der Taschen 8 sind eine Kugel 10 und eine (nicht dargestellte) Tangentialfeder 28 angeordnet, wobei die Kugel auf der schrägen Laufbahn 26 abrollen kann. Ein Durchmesser der Kugeln 10 sollte größer als eine geringste Tiefe der Taschen 8 sein. Bevorzugt weisen alle Kugeln den gleichen Durchmesser und alle Taschen die gleichen Abmessungen auf. Die Tangentialfedern 28 drücken die Kugeln 10 in Umfangrichtung gegen ein jeweiliges Ende der Taschen 8, und zwar gegen das Ende, an dem die entsprechende Tasche ihre geringste Tiefe aufweist.

Weiter weist der Grundkörper 2 eine Anschlagfläche 18 auf, an der sich ein erstes Ende des Axialfederelements 6 abstützt, wobei bevorzugt die Anschlagfläche 18 radial (also in einer Richtung senkrecht zur Achse) weiter innen liegt als die Taschen 8. An der Anschlagfläche 18 ist ein Axialnadellager 20 angeordnet, das ein reibungsarmes Drehen von Grundkörper 2 und Axialfederelement 6 um die Achse, relativ zueinander, ermöglicht.

Der Deckelkörper 4 weist ein ringförmiges erstes Trägerelement 12, ein ringförmiges zweites Trägerelement 14 und ein Verbindungsmittel 16 auf, welches das erste und das zweite Trägerelement verbindet. Das erste Trägerelement 12 und das zweite Trägerelement 14 sind in axial voneinander beabstandet, wobei das Verbindungsmittel 16 die beiden Trägerelemente 12, 14 in axialer Richtung stützt, so dass ein Abstand zwischen erstem und zweitem Trägerelement konstant ist. Gleichzeitig unterbindet das Verbindungsmittel 16 ein relatives Drehen (um die Achse) zueinander der beiden Trägerelemente 12, 14. Das Verbindungsmittel 16 fixiert also die relative Position von erstem und zweitem Trägerelement in Axial- und/oder Umfangrichtung.

Das Axialfederelement 6 ist, in axialer Richtung, zwischen dem ersten Trägerelement 12 und dem zweiten Trägerelement 14 angeordnet, wobei sich ein zweites Ende des Axialfederelements 6 an einer Oberfläche des ersten Trägerelements 12 abstützt. In radialer Richtung ist das Axialfederelement 6 weiter innen angeordnet als das Verbindungsmittel 16. Das Axialfederelement 6 bewirkt eine Federkraft in axialer Richtung, die Grundkörper 2 und Deckelkörper 4 gegebenenfalls auseinander drückt, da sich das erste Ende des Axialfederelements 6 an der Anschlagfläche 18 des Grundkörpers 2 abstützt. Das Axialfederelement 6 und die Kugeln 10 sind in Radialrichtung überlappend angeordnet. In Axialrichtung sind das Axialfederelement 6 und die Kugeln 10 nebeneinander angeordnet, wobei sich das zweite Trägerelement 14 zwischen Axialfederelement 6 und Kugeln 10 befindet. Insgesamt ist bevorzugt die Abfolge in axialer Richtung: erstes Trägerelement 12, Axialfederelement 6, zweites Trägerelement 14, Kugeln 10, bzw. anderes ausgedrückt überlappen diese vier Teile in Radialrichtung. Als Axialfederelement 6 wird bevorzugt eine Tellerfeder verwendet.

Eine von dem Axialfederelement 6 abgewandte Oberfläche des zweiten Trägerelements 14 liegt an den Kugeln 10 an, die in den Taschen 8 des Grundkörpers 2 angeordnet sind. Werden Grundkörper 2 und Deckelkörper 4 entgegen der Kraft des Axialfederelements 6 zusammengedrückt, z.B. beim Öffnungshub des Ventils, so wird eine axiale Kraft auf die Kugeln 10 ausgeübt, welche daraufhin einerseits auf den schrägen Laufbahnen 26 in den Taschen 8 abrollen und andererseits auf der vom Axialfederelement abgewandten Oberfläche des zweiten Trägerelements 14 abrollen. Dadurch werden Grundkörper 2 und Deckelkörper 4 relativ zueinander um die Achse verdreht. Beim Entlasten der Ventildrehvorrichtung, z.B. beim Schließhub des Ventils, drückt das Axialfederelement 6 den Grundkörper 2 und den Deckelkörper 4 wieder auseinander, wobei die auf den Kugeln 10 lastende Kraft kleiner wird und somit kein Abrollen der Kugeln stattfindet, wenn diese durch die Tangentialfedern 28 zurückgestellt werden.

Das Abrollen der Kugeln findet im Gegensatz zu bekannten Ventildrehvorrichtungen nicht auf der Tellerfeder statt, sondern auf dem zweiten Trägerelement. Dadurch wird eine hohe Wälzpressung an der Tellerfeder und damit einhergehender Verschleiß vermieden. Das zweite Trägerelement wiederum kann einfacher entsprechend der auftretenden Wälzbelastungen ausgelegt werden, da es nicht gleichzeitig eine Federfunktion übernehmen muss. Ebenso ist die Wahl des Axialfederelements, insbesondere einer Tellerfeder, nicht durch die Wälzbelastungen eingeschränkt, es wird also eine freiere Auslegung des Axialfederelements ermöglicht. Dadurch wird auch eine kompakte, platzsparende Bauweise der Ventildrehvorrichtung ermöglicht. Da die Tellerfeder vollständig in den Deckelkörper eingefügt ist, wird die komplette Hubbewegung der Tellerfeder über die Neigung der Taschen in eine Drehbewegung umgesetzt. Gegenüber bisherigen Bauformen kann dadurch die Drehbewegung je Hub um das zirka 1,5- bis 2-fache erhöht werden. Alternativ kann bei unveränderter Drehung eine steifere Tellerfeder mit erhöhter Lebensdauer verwendet werden.

Die vom Axialfederelement 6 abgewandte Oberfläche des zweiten Trägerelements 14 kann eine Kugellaufbahn aufweisen, dadurch wird z.B. die Wälzpressung am zweiten Trägerelement vermindert.

Die vom Axialfederelement 6 abgewandte Oberfläche des zweiten Trägerelements 12 ist bevorzugt eingerichtet, um als Stützfläche für eine Ventilfeder zu dienen.

Erfindungsgemäß sind erstes Trägerelement 12, zweites Trägerelement 14 und Verbindungsmittel 16 einstückig gefertigt.

Das Verbindungsmittel 16 ist in Fig. 1 erfindungsgemäß als ringförmige

Wand realisiert, welche eine Ausnehmung aufweist, die es ermöglicht (insbesondere ausreichend groß ist), das Axialfederelement 6 seitlich einzusetzen. In der Schnittansicht ist die Ausnehmung auf der rechten Seite erkennbar. Fig. 4 stellt eine entsprechende Detailansicht dar, in welcher das Axialfederelement 6 in teilweise eingesetztem Zustand gezeigt ist. In diesem Fall ist die, mit Bezugszeichen 24 benannte, ringförmige Wand mit Ausnehmung einstückig mit dem ersten Trägerelement 12 und dem zweiten Trägerelement 14 gefertigt.

Die in Fig. 2 dargestellte Ausführungsform ist im Wesentlichen identisch zu der in Fig. 1 gezeigten. Der einzige Unterschied besteht darin, dass an der Anschlagfläche 18 ein Axialkugellager 22 angeordnet ist, das eine reibungsarme relative Drehbewegung von Grundkörper und Axialfederelement bzw. Deckelkörper um die Achse ermöglicht. Ansonsten gilt für Fig. 2 das oben im Zusammenhang mit Fig. 1 gesagte. Selbstverständlich können auch andere Axiallager als die in Fig. 1 und Fig. 2 gezeigten verwendet werden, z.B. ein Axialzylinderrollenlager oder ein Axialkegelrollenlager.

Fig. 3 stellt eine weitere Ausführungsform dar. Diese ist im Wesentlichen identisch zu den in den Fig. 1 und Fig. 2 gezeigten Ausführungsformen, wobei zwei Unterschiede vorhanden sind. Zunächst ist hier die Anschlagfläche 18 des Grundkörpers 2 mit einer reibungsvermindernden Gleitbeschichtung versehen, so dass das erste Ende des Axialfederelements 6 reibungsarm an der Anschlagfläche 18 gleiten kann. Weiter umfasst das Axialfederelement 6 mehrere gestapelte Tellerfedern, der Abstand der beiden Trägerelemente 12, 14 ist entsprechend angepasst.

Fig. 5 stellt eine teilweise Schnittansicht in Umfangrichtung dar, wobei eine Tasche 8 mit einer schrägen Laufbahn 26 gezeigt ist. In der Tasche 8 ist eine Kugel 10 und eine Tangentialfeder 28 angeordnet, welche die Kugel 10 gegen das Ende der Tasche 8, an dem die Tasche ihre geringste Tiefe aufweist. Weiter ist ein Ausschnitt des zweiten Trägerelements 14 zu sehen, das an der Kugel 10 anliegt. Bei axialer Belastung werden Grundkörper 2 und zweites Trägerelement 14 aufeinander zu bewegt, so dass die Kugel 10 sowohl auf der schrägen Laufbahn 26 als auch auf der Oberfläche des zweiten Trägerelements 14 abrollt und somit den Grundkörper 2 relativ zum Deckelkörper um die Achse dreht.

### Bezugszeichenliste

- 2: Grundkörper
- 4: Deckelkörper
- 6: Axialfederelement
- 8: Tasche
- 10: Kugel
- 12: erstes Trägerelement
- 14: zweites Trägerelement
- 16: Verbindungsmittel
- 18: Anschlagfläche
- 20: Axialnadellager
- 22: Axialkugellager
- 24: ringförmige Wand mit Ausnehmung
- 26: Laufbahn
- 28: Tangentialfeder

## Patentansprüche

1. Ventildrehvorrichtung umfassend
einen ringförmigen Grundkörper (2), der mehrere in einer Umfangrichtung orientierte Taschen (8) aufweist, in denen jeweils eine Kugel (10) und eine Tangentialfeder (28) angeordnet sind, wobei die Taschen (8) in Umfangrichtung eine variable Tiefe aufweisen, so dass schräge Laufbahnen (26) für die darin angeordneten Kugeln (10) gebildet werden, wobei die Tangentialfedern (28) die Kugeln (10) in Richtung eines Endes der jeweiligen Tasche (8) drücken;
einen ringförmigen Deckelkörper (4), der relativ zum Grundkörper (2) um eine Achse drehbar und axial verschiebbar ist, der ein ringförmiges erstes Trägerelement (12) und ein ringförmiges zweites Trägerelement (14) aufweist, welche voneinander axial beabstandet sind, und der ein Verbindungsmittel (16) aufweist, welches das erste und das zweite Trägerelement verbindet und welches das erste und das zweite Trägerelement relativ zueinander fixiert; und
ein ringförmiges Axialfederelement (6), wobei sich ein erstes Ende des Axialfederelements (6) an einer ringförmigen Anschlagfläche (18) des Grundkörpers (2) abstützt und sich ein zweites Ende des Axialfederelements (6) an einer Oberfläche des ersten Trägerelements (12) abstützt, wobei das Axialfederelement (6) zwischen dem ersten Trägerelement (12) und dem zweiten Trägerelement (14) angeordnet ist;
wobei eine Oberfläche des zweiten Trägerelements (14), welche von dem Axialfederelement (6) abgewandt ist, an den Kugeln (10) anliegt, und wobei die Kugeln (10) und das Axialfederelement (6) in Radialrichtung überlappend angeordnet sind,
**dadurch gekennzeichnet, dass**
das erste Trägerelement (12), das zweite Trägerelement (14) und das Verbindungsmittel (16) einstückig gefertigt sind, und dass
das Verbindungsmittel (16) in Form einer ringförmigen äußeren Wand (24) vorliegt, welche eine Ausnehmung aufweist, durch die das Axialfederelement (6) seitlich eingesetzt ist.

2. Ventildrehvorrichtung gemäß Anspruch 1, wobei das Verbindungsmittel (16) radial außerhalb des Axialfederelements (6) angeordnet ist.

3. Ventildrehvorrichtung gemäß einem der vorstehenden Ansprüche, wobei die Anschlagfläche (18) mit einer Gleitbeschichtung versehen ist.

4. Ventildrehvorrichtung gemäß einem der vorstehenden Ansprüche 1-2, wobei an der Anschlagfläche (18) ein Axialnadellager (20) oder ein Axialkugellager (22) angeordnet ist.

5. Ventildrehvorrichtung gemäß einem der vorstehenden Ansprüche, wobei das Axialfederelement (6) eine Tellerfeder ist.

6. Ventildrehvorrichtung gemäß einem der vorstehenden Ansprüche 1-4, wobei das Axialfederelement (6) mindestens zwei gestapelte Tellerfedern umfasst.

7. Ventildrehvorrichtung gemäß einem der vorstehenden Ansprüche, wobei eine vom Axialfederelement (6) abgewandte Oberfläche des ersten Trägerelements (12) eingerichtet ist, als Stützfläche für eine Ventilfeder zu dienen.

8. Ventildrehvorrichtung gemäß einem der vorstehenden Ansprüche, wobei die vom Axialfederelement (6) abgewandte Oberfläche des zweiten Trägerelements (14) eine Kugellaufbahn aufweist.

## Claims

1. A valve rotating device comprising
an annular base body (2) having multiple pockets (8), oriented in a circumferential direction, in which a ball (10) and a tangential spring (28) are arranged respectively, wherein the pockets (8) have a variable depth in circumferential direction so that inclined running paths (26) for the balls (10) arranged therein are formed, wherein the tangential springs (28) press the balls (10) in direction of one end of the respective pocket (8);
an annular cover body (4) that is rotatable relative to the base body (2) about an axis and axially movable, that has an annular first support element (12) and an annular second support element (14) that are axially spaced apart from one another, and that has a connection means (16) which connects the first and the second support element and which fixes the first and the second support element relative to one another; and
an annular axial spring element (6), wherein a first end of the axial spring element (6) is supported on an annular stop surface (18) of the base body (2), and a second end of the axial spring element (6) is supported on a surface of the first support element (12), wherein the axial spring element (6) is arranged between the first support element (12) and the second support element (14);
wherein a surface of the second support element (14) facing away from the axial spring element (6) abuts against the balls (10), and wherein the balls (10) and the axial spring element (6) are arranged in an overlapping manner in radial direction,
**characterized in that**
the first support element (12), the second support element (14), and the connection means (16) are manufactured in one piece, and that
the connection means (16) is present in the form of an annular outer wall (24) which has a recess through which the axial spring element (6) is laterally inserted.

2. The valve rotating device according to claim 1, wherein the connection means (16) is arranged radially outside the axial spring element (6).

3. The valve rotating device according to one of the preceding claims, wherein the stop surface (18) is provided with an anti-friction coating.

4. The valve rotating device according to one of preceding claims 1-2, wherein an axial needle bearing (20) or an axial ball bearing (22) is arranged on the stop surface (18).

5. The valve rotating device according to one of the preceding claims, wherein the axial spring element (6) is a disk spring.

6. The valve rotating device according to one of preceding claims 1-4, wherein the axial spring element (6) comprises at least two stacked disk springs.

7. The valve rotating device according to one of preceding claims, wherein a surface of the first support element (12) facing away from the axial spring element (6) is configured as support surface for a valve spring.

8. The valve rotating device according to one of the preceding claims, wherein the surface of the second support element (14) facing away from the axial spring element (6) has a ball running path.

## Revendications

1. Dispositif de rotation de soupape comprenant
un corps de base annulaire (2), qui présente plusieurs poches orientées (8) dans une direction circonférentielle, dans chacune desquelles une bille (10) et un ressort tangentiel (28) sont disposés, dans lequel les poches (8) présentent une profondeur variable dans la direction circonférentielle, de sorte que des chemins de roulement inclinés (26) sont formés pour les billes (10) qui y sont disposées, dans lequel les ressorts tangentiels (28) pressent les billes (10) dans la direction d'une extrémité de la poche respective (8) ;
un corps de couvercle annulaire (4) qui peut tourner et se déplacer axialement autour d'un axe par rapport au corps de base (2), qui présente un premier élément porteur annulaire (12) et un deuxième élément porteur annulaire (14), qui sont espacés axialement l'un de l'autre et qui présente un moyen de liaison (16), qui relie le premier et le deuxième élément porteur et qui fixe le premier et le deuxième élément porteur l'un par rapport à l'autre ; et
un élément à ressort axial annulaire (6), dans lequel une première extrémité de l'élément à ressort axial (6) s'appuie sur une surface de butée annulaire (18) du corps de base (2) et une deuxième extrémité de l'élément à ressort axial (6) s'appuie sur une surface du premier élément porteur (12), dans lequel l'élément à ressort axial (6) est disposé entre le premier élément porteur (12) et le deuxième élément porteur (14) ;
dans lequel une surface du deuxième élément porteur (14), qui se détourne de l'élément à ressort axial (6) tourné vers l'extérieur, vient reposer sur les billes (10), et dans lequel les billes (10) et l'élément à ressort axial (6) sont disposés en chevauchement dans la direction radiale,
**caractérisé en ce que**
le premier élément porteur (12), le deuxième élément porteur (14) et le moyen de liaison (16) sont réalisés en un seul tenant, et **en ce que**
le moyen de liaison (16) se présente sous la forme d'une paroi extérieure annulaire (24) qui présente un évidement à travers lequel l'élément à ressort axial (6) est inséré latéralement.

2. Dispositif de rotation de soupape selon la revendication 1, dans lequel le moyen de liaison (16) est disposé radialement à l'extérieur de l'élément à ressort axial (6).

3. Dispositif de rotation de soupape selon une quelconque des revendications précédentes, dans lequel la surface de butée (18) est munie d'un revêtement de glissement.

4. Dispositif de rotation de soupape selon une des revendications précédentes 1-2, dans lequel sur la surface de butée (18), un roulement à aiguilles axial (20) ou un roulement à billes axial (22) est disposé.

5. Dispositif de rotation de soupape selon une quelconque des revendications précédentes, dans lequel l'élément à ressort axial (6) est un ressort à disque.

6. Dispositif de rotation de soupape selon une des revendications précédentes 1-4, dans lequel l'élément à ressort axial (6) comprend au moins deux rondelles ressorts empilées.

7. Dispositif de rotation de soupape selon une des revendications précédentes, dans lequel une surface du premier élément porteur (12) opposée à l'élément à ressort axial (6) est destinée à servir de surface d'appui à un ressort de soupape.

8. Dispositif de rotation de soupape selon une des revendications précédentes, dans lequel la surface du deuxième élément porteur (14) qui se détourne de l'élément à ressort axial (6) présente un chemin de roulement de billes.
